# EUROPÄISCHE PATENTSCHRIFT

(11) **EP 2 337 186 B1**
(45) Veröffentlichungstag und Bekanntmachung des Hinweises auf die Patenterteilung: **21.09.2016**
(21) Anmeldenummer: 09015696.9
(22) Anmeldetag: 18.12.2009
(51) Int. Cl.: H02K 1/27, H02K 5/18

(54) **Außenläufer-Elektromotor**
Outer rotor electric motor
Moteur électrique à rotor externe

(43) Veröffentlichungstag der Anmeldung: 22.06.2011
(73) Patentinhaber: ZIEHL-ABEGG SE, 74653 Künzelsau (DE)
(72) Erfinder: Knorr, Joachim, 97996 Niederstetten (DE); Sturm, Thorsten, 74238 Krautheim (DE)
(74) Vertreter: Kohl, Karl-Heinz

(56) Entgegenhaltungen:
- EP-A1- 0 688 086
- JP-A- 2005 324 059
- US-A- 4 554 472
- US-A1- 2001 017 498

## Beschreibung

Die Erfindung betrifft einen Außenläufer- Electromotor.

Es sind Elektromotoren bekannt, bei denen die Statorbuchse außenseitig nahe dem Rotorgehäuse Kühlelemente in Form von Kühlrippen aufweist, die mit Abstand gleichmäßig verteilt über den Umfang der Statorbuchse vorgesehen sind. Diesen Kühlrippen liegen rotorseitige Kühlrippen gegenüber, die ein Luftförderelement bilden. Beim Betrieb des Elektromotors wird infolge der relativ zueinander drehenden Kühlrippen Außenluft als Kühlluft angesaugt und zwischen die relativ zueinander drehenden Kühlrippen geleitet. Eine gute Luftführung längs der Kühlrippen ist dadurch nicht möglich. Darüber hinaus tritt durch die einander zugewandten Kanten der stator- und der rotorseitigen Kühlrippen eine erhebliche Geräuschentwicklung auf, die beim Einsatz des Elektromotors störend ist.

Es sind auch Elektromotoren bekannt, bei denen der Rotor innenseitig ein Kühlrad trägt. Mit ihm wird Außenluft durch Öffnungen im Motorgehäuse angesaugt. Die Luft strömt an der zu kühlenden Motorelektronik vorbei und nimmt hierbei Wärme auf. Die erwärmte Luft tritt dann seitlich aus dem Motorgehäuse aus.

Bei einem anderen bekannten Elektromotor ist der Rotor mit einem Lüfterrad versehen, um eine Regelelektronik zu kühlen, die in einem Kühlrippen aufweisenden Gehäuse untergebracht ist.

JP 2005-324059 A zeigt:

Außenläufer-Elektromotor mit einer Statorbuchse, in der Wärme erzeugende Bauteile untergebracht sind, und mit einem Rotorgehäuse, das wenigstens ein Luftförderelement aufweist, wobei das Luftförderelement eine Ringscheibe aufweist, wobei die Ringscheibe des Luftförderelementes wenigstens eine Durchlassöffnung aufweist, durch welche Kühlluft strömt, wobei Strömungsleitelemente vorgesehen sind, wobei die Strömungsleitelemente Rippen sind, die umfangsseitig Strömungsräume begrenzen.

Der Erfindung liegt die Aufgabe zugrunde, den gattungsgemäßen Außenläufer-Elektromotor so auszubilden, dass mit ihm bei einfacher konstruktiver Gestaltung eine optimale Kühlung bei minimaler Geräuschentwicklung gewährleistet ist.

Diese Aufgabe wird beim gattungsgemäßen Elektromotor erfindungsgemäß mit den Merkmalen des Anspruches 1 gelöst.

Beim erfindungsgemäßen Elektromotor ist das Luftförderelement, das der Statorbuchse gegenüberliegt, mit der zumindest im Wesentlichen glatten Oberseite versehen. Sie führt dazu, dass die angesaugte Luft zuverlässig radial nach innen gelenkt bzw. geleitet wird. Aufgrund der dadurch erreichten gleichmäßigen Luftströmung ergibt sich eine optimale Kühlung. Da das Luftförderelement die im Wesentlichen glatte Oberseite aufweist, tritt nur eine minimale Geräuschentwicklung beim Betrieb des erfindungsgemäßen Elektromotors auf, selbst bei hohen Drehzahlen. Sollte die Statorbuchse an ihrer Außenseite mit Kühlelementen, beispielsweise in Form von Kühlrippen, versehen sein, dann wird durch den Einsatz der zumindest im Wesentlichen glatten Oberseite vermieden, dass Kanten von Kühlelementen aneinander vorbeilaufen, was zu einer hohen Geräuschentwicklung, insbesondere bei hohen Drehzahlen, führen würde.

Das Luftförderelement weist eine Ringscheibe auf, die mit der im Wesentlichen glatten Oberseite versehen ist. Diese Ringscheibe liegt in einer Radialebene des Rotorgehäuses und gewährleistet, dass die angesaugte Luft über den Umfang des Rotorgehäuses gleichmäßig radial nach innen geleitet wird.

Damit die angesaugte und nach innen strömende Luft an die Unterseite des Luftförderelementes gelangen kann, ist dieses mit wenigstens einer Durchlassöffnung versehen. Die Luft strömt somit von der Außenseite des Elektromotors längs des Luftförderelementes nach innen und gelangt über die Durchlassöffnung in den Bereich unterhalb des Luftförderelementes. Dadurch wird ein langer Strömungsweg erreicht, der zu einer optimalen Kühlung der erwärmten Bauteile des Elektromotors führt.

Erfindungsgemäß sind in Strömungsrichtung hinter der Durchlassöffnung Strömungsleitelemente vorgesehen. Sie sorgen dafür, dass die Luft nach Durchströmen der Durchlassöffnung von den Strömungsleitelementen gleichmäßig wieder nach außen geführt wird. Die angesaugte Luft wird somit während ihres Strömungsweges um etwa 180° radial innen umgelenkt. Auf diese Weise wird trotz kleiner radialer Abmessungen ein langer Strömungsweg für die Luft erreicht, so dass eine optimale Wärmeabfuhr sichergestellt ist.

Die Strömungsleitelemente sind Rippen, die vorteilhaft radial verlaufen. Die Rippensind an der Unterseite der Ringscheibe vorgesehen. Diese Rippen liegen vorteilhaft in Axialebenen des Rotorgehäuses. Die Luft wird mit Hilfe dieser radial verlaufenden Rippen gleichmäßig über den Umfang nach außen abgeführt. Die Rippen begrenzen umfangsseitig Strömungsräume für die umgelenkte Luft. Durch Einstellung des Abstandes der Rippen voneinander kann die Strömungsgeschwindigkeit der Luft nach der Umlenkung sehr einfach eingestellt werden.

Um eine gleichmäßige Kühlung über den Umfang des Elektromotors sicherzustellen, sind die Strömungsleitelemente vorteilhaft gleichmäßig über den Umfang des Luftförderelementes verteilt vorgesehen.

Es ist aber auch möglich, die Strömungsleitelemente ungleichmäßig über den Umfang des Luftförderelementes verteilt vorzusehen.

Damit die von außen angesaugte Luft gleichmäßig über den Umfang des Luftförderelementes zwischen die Strömungsleitelemente geleitet wird, überragen die Strömungsleitelemente die Ringscheibe vorteilhaft radial nach innen. Dadurch wird erreicht, dass die angesaugte Luft durch die überstehenden Strömungsleitelemente gleichmäßig in einzelne Strömungsabschnitte unterteilt wird, so dass über den Umfang des Luftförderelementes eine gleichmäßige Wärmeableitung erreicht wird.

Erfindungsgemäß ist vorgeshen, daß die Durchlassöffnung eine über den Umfang des Luftförderelementes sich erstreckende Ringöffnung ist. Dann wird die gleichmäßige Verteilung der angesaugten Luft über den Umfang des Luftförderelementes zuverlässig erreicht.

Die Ringöffnung wird vorteilhaft radial nach außen durch den radial inneren Rand der Ringscheibe des Luftförderelementes begrenzt.

Eine vorteilhafte Ausführung ergibt sich, wenn das Luftförderelement mit einer Dichtung einstückig ausgebildet ist, welche die Statorbuchse gegenüber dem Rotorgehäuse abdichtet. In diesem Falle besteht das Luftförderelement aus dem gleichen Kunststoff wie die Dichtung.

Sind das Luftförderelement und die Dichtung nicht einstückig miteinander ausgebildet, können für beide Komponenten die für ihre jeweilige Funktionsaufgabe günstigsten Materialien eingesetzt werden. So kann beispielsweise das Luftförderelement auch aus metallischem Werkstoff bestehen, um zu einer optimalen Wärmeabfuhr beizutragen.

Weitere Merkmale der Erfindung ergeben sich aus den weiteren Ansprüchen, der Beschreibung und den Zeichnungen.

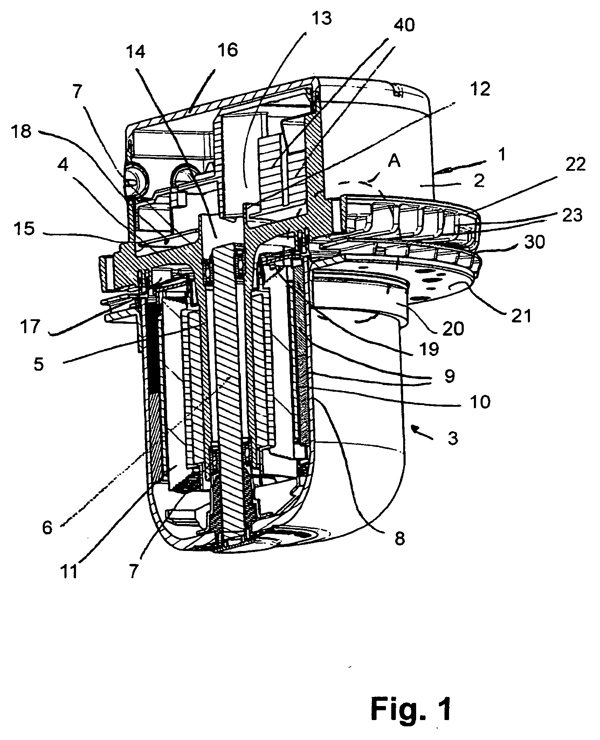

Die Erfindung wird anhand eines in den Zeichnungen dargestellten Ausführungsbeispieles näher erläutert. Es zeigen
- Fig. 1: in perspektivischer Darstellung und im Schnitt einen erfindungsgemäßen Elektromotor,
- Fig. 2: in perspektivischer Darstellung einen Rotor des erfindungsgemäßen Elektromotors,
- Fig. 3: in perspektivischer Darstellung die Unterseite eines Luftförderelementes des erfindungsgemäßen Elektromotors,
- Fig. 4: in perspektivischer Darstellung eine Draufsicht auf das Luftförderelement gemäß Fig. 3,
- Fig. 5: in vergrößerter Darstellung und im Schnitt den Ausschnitt A in Fig. 1.

Der Elektromotor ist ein Außenläufermotor, der beispielsweise ein elektronisch kommutierter Gleichstrommotor sein kann. Der Elektromotor hat eine Statorbuchse 1 mit einem Mantel 2, der vorzugweise zylindrisch ausgebildet ist. Die Statorbuchse 1 hat an ihrem einem Rotor 3 zugewandten Ende einen Boden 4, von dem mittig ein buchsenförmiges Lagerrohr 5 absteht, das sich in den Rotor 3 erstreckt. Das Lagerrohr 5 ist vorteilhaft einstückig mit dem Boden 4 ausgebildet. Im Lagerrohr 5 ist eine Rotorwelle 6 mit zwei Lagern 7 nahe dem oberen und unteren Ende drehbar gelagert. Die Lager 7 sind im Ausführungsbeispiel Kugellager, können aber auch jedes andere geeignete Lager sein.

Der Rotor 3 hat ein Rotorgehäuse 8, an dessen Innenseite Permanentmagnete 9 befestigt sind. Sie umgeben unter Bildung eines ringförmigen Luftspaltes 10 ein Rotorpaket 11, das mit einer Rotorwicklung in bekannter Weise versehen ist.

Das Lagerrohr 5 setzt sich in einen ringförmigen Ansatz 12 fort, der über den Boden 4 in den vom Statormantel 2 umgebenen Innenraum 13 ragt. Der Ansatz 12 ist vorteilhaft einstückig mit dem Boden 4 ausgebildet und umgibt einen Durchlass 14 im Boden 4. Der Ansatz 12 hat vorteilhaft Zylinderform und liegt vorzugsweise etwa mittig zum Boden 4. In Achsrichtung ist der Ansatz 12 kürzer als der koaxial zu ihm liegende Statormantel 2. Zwischen dem Ansatz 12 und dem Statormantel 2 ist ein ringförmiger Aufnahmeraum 15 gebildet, in den eine Vergussmasse eingebracht werden kann.

Auf die Stirnseite des Statormantels 2 ist ein Deckel 16 aufgesetzt, der in bekannter Weise fest und dicht mit dem Statormantel 2 verbunden ist.

Der Boden 4 der Statorbuchse 1 trennt den einen Elektronikraum bildenden Innenraum 13 von einem Motorraum 17. Im Innenraum 13 befindet sich der ringförmige Aufnahmeraum 15, der mit Vergussmasse gefüllt wird. In ihr ist eine Leiterplatte 18 untergebracht, welche die elektrischen/elektronischen Bauteile 40 zum Betrieb des Elektromotors trägt. Im Motorraum 17 befindet sich eine motorseitige Leiterplatte 19, die in eine Vergussmasse eingebettet wird.

An der Außenseite des Rotorgehäuses 8 ist am oberen, der Statorbuchse 1 zugewandten Ende ein Rotorflansch 20 befestigt. Er hat einen radial nach außen ragenden Ringscheibenteil 21.

An dem dem Rotorgehäuse 8 zugewandten Ende ist am Mantel 2 der Statorbuchse 1 ein radial nach außen gerichteter Flansch 22 vorgesehen, der vorteilhaft einstückig mit dem Mantel 2 ausgebildet ist. An seiner dem Rotorflansch 20 zugewandten Unterseite des Flansches 22 sind Kühlrippen 23 vorgesehen, die sich zumindest über die radiale Breite des Flansches 22 erstrecken. Die Kühlrippen 23 liegen mit Abstand hintereinander.

Zwischen dem Mantel 2 der Statorbuchse 1 und dem Rotorgehäuse 8 befindet sich ein Labyrinthspalt 24. Vom Boden 4 der Statorbuchse 1 stehen in Richtung auf das Rotorgehäuse 8 drei ringförmige Vorsprünge 25 ab, die koaxial zueinander liegen und zwischen denen zwei Ringräume 26 gebildet sind, in die zwei koaxial zueinander liegende schmale Ringstege 27 mit Spiel eingreifen. Sie sind Teil eines aus Kunststoff bestehenden Dichtelementes 28, das auf der Stirnseite des Rotorgehäuses 8 befestigt ist. Die Kühlrippen 23 erstrecken sich radial bis zum äußeren ringförmigen Vorsprung 25 der Statorbuchse 1.

Auf dem Flansch 22 der Statorbuchse 1 ist ein scheibenförmiges Tragelement 29 befestigt, das radial über den Flansch 22 ragt und mit dem der Elektromotor gehalten wird. Im Ausführungsbeispiel ist der radial überstehende Bereich des Tragelementes 29 etwa so breit wie der auf dem Flansch 22 aufliegende Bereich des Tragelementes. Selbstverständlich kann der Überstand des Tragelementes 29 über den Flansch 22 auch anders gewählt sein.

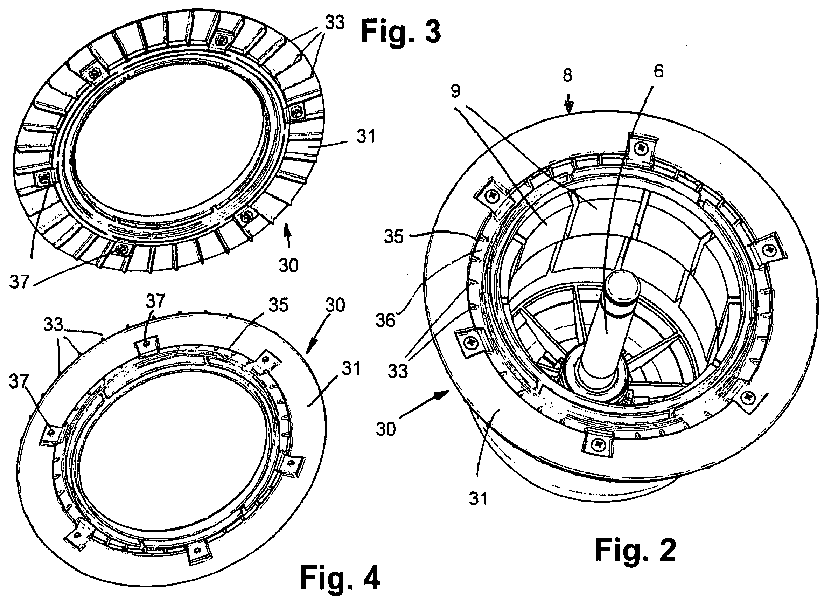

Der Rotor 3 ist mit wenigstens einem Luftförderelement 30 versehen, das mit Abstand den Kühlrippen 23 der Statorbuchse 1 axial gegenüberliegt. Das Luftförderelement 30 hat eine Ringscheibe 31, deren den Kühlrippen 23 zugewandte Oberseite 32 eben ist. An der Unterseite der Ringscheibe 31 sind Rippen 33 vorgesehen, die sich radial über die gesamte Breite der Ringscheibe 31 erstrecken (Fig. 3). Die Rippen 33 sind über den Umfang der Ringscheibe 31 gleichmäßig verteilt und untereinander vorteilhaft gleich ausgebildet.

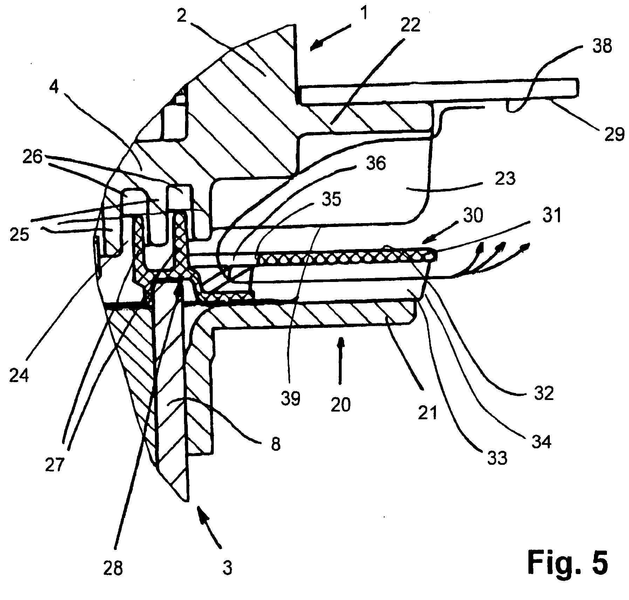

Die Ringscheibe 31 steht radial geringfügig über den Ringscheibenteil 21 des Rotorflansches 20 vor. Die radial äußere Stirnseite 34 der Rippen 33 ist schräg nach unten geneigt (Fig. 5). Der radial innere Rand 35 der Ringscheibe 31 hat radialen Abstand vom radial äußeren Ringvorsprung 25 der Statorbuchse 1 bzw. dem radial äußeren Ringsteg 27 des Dichtelementes 28. Dadurch wird über den Umfang der Ringscheibe 31 eine ringförmige Öffnung 36 gebildet, über die in noch zu beschreibender Weise Luft unter die Ringscheibe 31 gelangen kann.

Das Luftförderelement 30 wird vorteilhaft lösbar am Rotorgehäuse 8 befestigt. Hierzu sind über den Umfang der Ringscheibe 31 gleichmäßig verteilt Befestigungselemente 37 vorgesehen, mit denen das Luftförderelement 30 am Rotor 3 befestigt wird.

Vorteilhaft sind das Dichtelement 28 und das Luftförderelement 30 einstückig miteinander ausgebildet, so dass diese als Einheit am Rotor 3 montiert werden können.

Die elektrischen/elektronischen Bauteile 40 sowie weitere Teile in der Statorbuchse 1 erwärmen sich während des Betriebs des Elektromotors. Dadurch werden auch die Statorbuchse 1 mit dem Boden 4 und dem Tragelement 29 erwärmt. Die Kühlrippen 23 der Statorbuchse 1 sorgen für die Wärmeableitung und damit Kühlung der Statorbuchse 1. Das Luftförderelement 30 erzeugt eine maximale Luftmenge für eine optimale Kühlung, ohne dass dadurch eine hohe Geräuschentwicklung verbunden ist. Das drehfest mit dem Rotorgehäuse 8 verbundene Luftförderelement 30 dreht beim Betrieb des Elektromotors relativ zur Statorbuchse 1. Diese Drehung führt dazu, dass Umgebungsluft zwischen die Kühlrippen 23 der Statorbuchse 1 angesaugt wird. In Fig. 5 sind die entsprechenden Strömungspfeile der angesaugten Luft eingezeichnet. Das Tragelement 29 sorgt dafür, dass diese Luft gerichtet dem Bereich der Kühlrippen 23 zugeleitet wird. Die ebene Unterseite 38 des Tragelementes 29 sorgt für eine störungsfreie Zuführung der Kühlluft, die zwischen die in Umfangsrichtung mit Abstand hintereinander liegenden Kühlrippen 23 strömt. Radial innen wird die Luft durch die Kühlrippen 23 und den Boden 4 mit den ringförmigen Vorsprüngen 25 nach unten so umgelenkt, dass die Luft durch die Ringöffnung 36 strömt. Die angesaugte Luft gelangt dadurch in den Bereich unterhalb der Ringscheibe 31 des Luftförderelementes 30. Hier wird die Luft zwischen den Rippen 33 der Unterseite der Ringscheibe 31 radial nach außen gelenkt. Da sich die Rippen 33 bis in die Ringöffnung 36 erstrecken, gelangt die angesaugte Luft gleichmäßig in alle Zwischenräume zwischen den Rippen 33. Dadurch ist gewährleistet, dass die angesaugte Luft gleichmäßig über den Umfang der Statorbuchse 1 verteilt angesaugt und abgeführt wird. Die Ringscheibe 31 mit den Rippen 33 erzeugt eine definierte Strömungsrichtung für die Kühlluft, wodurch eine optimale Kühlung erreicht wird.

Die Stärke der Strömung kann einfach an den Einsatzfall angepasst werden. So kann der Abstand zwischen der Ringscheibe 31 und den Kühlrippen 23 der Statorbuchse 1 variiert werden. Zusätzlich kann die radiale Breite der Ringöffnung 36 variiert werden. Durch das Zusammenspiel des axialen Abstandes der Ringscheibe 31 von den Kühlrippen 23 und der radialen Breite der Ringöffnung 36 lässt sich die Strömungsgeschwindigkeit der angesaugten Kühlluft und damit die Kühlwirkung optimal einstellen. Auch kann durch Einstellung des Abstandes zwischen den Rippen 33 die Strömungsgeschwindigkeit und damit die Kühlwirkung beeinflusst werden.

Da die Oberseite 32 der Ringscheibe 31 glatt ist, treten keine Bauteilkanten auf, die beim Ansaugen der Kühlluft zu einer erheblichen Geräuschbelästigung führen könnten. Die Luft wird längs der glatten Oberseite 32 der Ringscheibe 31 radial nach innen geführt. Da den unteren Kanten 39 der Kühlrippen 23 die glatte Oberseite 32 der Ringscheibe 31 gegenüber liegt, wird die Kühlluft selbst bei hoher Strömungsgeschwindigkeit nahezu geräuschfrei angesaugt.

Die Ringscheibe 31 ist bevorzugt einstückig ausgebildet. Sie könnte aber auch aus einzelnen Ringsegmenten bestehen, die zur Ringscheibe zusammengefügt werden. Das Luftförderelement 30 besteht bevorzugt aus einem Kunststoff, so dass das Luftförderelement einfach und kostengünstig hergestellt werden kann. Wenn es in vorteilhafter Weise einstückig mit dem Dichtelement 28 ausgebildet ist, ergibt sich eine einfache und kostengünstige Herstellung sowie eine problemlose Montage.

Die mit dem Luftförderelement 30 erreichte hohe Luftströmung führt zu einer hohen Kühlwirkung, so dass die Kühlrippen 23, der Flansch 22 sowie das Tragelement 29 hervorragend gekühlt werden. Auf diese Weise lässt sich die im Inneren der Statorbuchse 1 entstehende Wärme einwandfrei abführen.

## Patentansprüche

1. Außenläufer-Elektromotor mit einer Statorbuchse (1), in der Wärme erzeugende Bauteile (40) untergebracht sind, und mit einem Rotorgehäuse (8), das wenigstens ein Luftförderelement (30) aufweist, wobei an der Außenseite des Rotorgehäuses (8) am oberen, der Statorbuchse (1) zugewandten Ende ein Rotorflansch (20) befestigt ist, der einen radial nach außen ragenden Ringscheibenteil (21) hat, wobei das Luftförderelement (30) eine Ringscheibe (31) aufweist, die eine der Statorbuchse (1) zugewandte glatte Oberseite (32) aufweist, wobei die Ringscheibe (31) des Luftförderelementes (30) wenigstens eine Durchlassöffnung (36) aufweist, durch welche Kühlluft strömt und die eine über den Umfang des Luftförderelementes (30) sich erstreckende Ringöffnung ist, wobei in Strömungsrichtung hinter der Durchlassöffnung (36) Strömungsleitelemente (33) vorgesehen sind, die die Luft nach Durchströmen der Durchlassöffnung (36) gleichmäßig wieder nach außen führen, wobei die Strömungsleitelemente (33) Rippen sind, die an der Unterseite der Ringscheibe (31) vorgesehen sind und umfangsseitig Strömungsräume für die umgelenkte Luft begrenzen.

2. Außenläufermotor nach Anspruch 1,
**dadurch gekennzeichnet, dass** die Strömungsleitelemente (33) radial verlaufende Rippen sind.

3. Außenläufermotor nach Anspruch 1 oder 2,
**dadurch gekennzeichnet, dass** die Strömungsleitelemente (33) über den Umfang des Luftförderelementes (30) gleichmäßig verteilt angeordnet sind.

4. Außenläufermotor nach Anspruch 1 oder 2,
**dadurch gekennzeichnet, dass** die Strömungsleitelemente (33) über den Umfang des Luftförderelementes (30) ungleichmäßig verteilt angeordnet sind.

5. Außenläufermotor nach einem der Ansprüche 1 bis 4,
**dadurch gekennzeichnet, dass** die Strömungsleitelemente (33) die Ringscheibe (31) radial nach innen überragen.

6. Außenläufermotor nach einem der Ansprüche 1 bis 5,
**dadurch gekennzeichnet, dass** die Ringöffnung (36) radial nach außen durch den radial inneren Rand (35) der Ringscheibe (31) des Luftförderelementes (30) begrenzt ist.

7. Außenläufermotor nach einem der Ansprüche 1 bis 6,
**dadurch gekennzeichnet, dass** das Luftförderelement (30) mit einer Dichtung (28) einstückig ausgebildet ist, die die Statorbuchse (1) gegenüber dem Rotorgehäuse (8) abdichtet.

## Claims

1. Outer rotor electric motor having a stator bushing (1), in which heat generating components (40) are accommodated, and having a rotor housing (8) that comprises at least one air conveying element (30), wherein to the outer side of the rotor housing (8), at the upper end facing towards the stator bushing (1), a rotor flange (20) is attached, which has an annular disc part (21) protruding radially to the outside, wherein the air conveying element (30) comprises an annular disc (31) having a smooth upper side (32) facing towards the stator bushing (1), wherein the annular disc (31) of the air conveying element (30) comprises at least one through-passage opening (36) through which cooling air flows and which is an annular opening extending over the circumference of the air conveying element (30), wherein flow conduction elements (33) are provided in the flow direction behind the through-passage opening (36), which direct the air uniformly to the outside again after its passage through the through-passage opening (36), wherein the flow conduction elements (33) are fins which are provided on the underside of the annular disc (31) and which bound flow chambers for the diverted air around its circumference.

2. The outer rotor electric motor according to claim 1,
**characterized in that** the flow conduction elements (33) are radially extending fins.

3. The outer rotor electric motor according to claim 1 or 2,
**characterized in that** the flow conduction elements (33) are arranged so as to be distributed uniformly over the circumference of the air pumping element (30).

4. The outer rotor electric motor according to claim 1 or 2,
**characterized in that** the flow conduction elements (33) are arranged so as to be distributed non-uniformly over the circumference of the air pumping element (30).

5. The outer rotor electric motor according to any one of claims 1 to 4,
**characterized in that** the flow conduction elements (33) protrude radially inwards beyond the annular disc (31).

6. The outer rotor electric motor according to any one of claims 1 to 5,
**characterized in that** the annular opening (36) is radially bounded to the outside by the radially inner edge (35) of the annular disc (31) of the air conveying element (30).

7. The outer rotor electric motor according to any one of claims 1 to 6,
**characterized in that** the air conveying element (30) is designed integrally with a seal (28), which seals off the stator bushing (1) from the rotor housing (8).

## Revendications

1. Moteur électrique à rotor externe avec une douille de stator (1) dans laquelle sont logés des éléments générant de la chaleur (40), et avec un boîtier de rotor (8) qui présente au moins un élément d'acheminement d'air (30), dans lequel, sur le côté extérieur du boîtier de rotor (8), sur l'extrémité supérieure tournée vers la douille de stator (1), une rebord de rotor (20) est fixée, laquelle possède une partie de disque annulaire (21) dépassant radialement vers l'extérieur, dans lequel l'élément d'acheminement d'air (30) présente un disque annulaire (31) qui présente une face supérieure lisse (32) tournée vers la douille de stator (1), dans lequel le disque annulaire (31) de l'élément d'acheminement d'air (30) présente au moins une ouverture de passage (36) à travers laquelle de l'air de refroidissement s'écoule et qui est une ouverture annulaire s'étendant sur la périphérie de l'élément d'acheminement d'air (30), dans lequel des éléments de guidage d'écoulement (33) sont prévus en direction d'écoulement derrière l'ouverture de passage (36), lesquels renvoient de nouveau l'air régulièrement vers l'extérieur après l'écoulement à travers l'ouverture de passage (36), dans lequel les éléments de guidage d'écoulement (33) sont des nervures qui sont prévues sur la face inférieure du disque annulaire (31) et qui délimitent des espaces d'écoulement côté périphérique pour l'air dévié.

2. Moteur à rotor externe selon la revendication 1,
**caractérisé en ce que** les éléments de guidage d'écoulement (33) sont des nervures s'étendant radialement.

3. Moteur à rotor externe selon la revendication 1 ou 2,
**caractérisé en ce que** les éléments de guidage d'écoulement (33) sont disposés de manière régulièrement répartie sur la périphérie de l'élément d'acheminement d'air (30).

4. Moteur à rotor externe selon la revendication 1 ou 2,
**caractérisé en ce que** les éléments de guidage d'écoulement (33) sont disposés de manière irrégulièrement répartie sur la périphérie de l'élément d'acheminement d'air (30).

5. Moteur à rotor externe selon l'une des revendications 1 à 4,
**caractérisé en ce que** les éléments de guidage d'écoulement (33) dépassent le disque annulaire (31) radialement vers l'intérieur.

6. Moteur à rotor externe selon l'une des revendications 1 à 5,
**caractérisé en ce que** l'ouverture annulaire (36) est délimitée radialement vers l'extérieur par le bord intérieur radial (35) du disque annulaire (31) de l'élément d'acheminement d'air (30).

7. Moteur à rotor externe selon l'une des revendications 1 à 6,
**caractérisé en ce que** l'élément d'acheminement d'air (30) est réalisé d'une seule pièce avec une garniture d'étanchéité (28) qui rend la douille de stator (1) étanche par rapport au boîtier de rotor (8).
